# NOUVEAU FASCICULE DE BREVET EUROPEEN

(11) **EP 0 894 993 B2**
(45) Date de publication et mention de la décision concernant l'opposition: **12.01.2005**
(45) Mention de la délivrance du brevet: 30.01.2002
(21) Numéro de dépôt: 98401737.6
(22) Date de dépôt: 09.07.1998
(51) Int. Cl.: F16D 23/12, F16D 23/14

(54) **Dispositif de commande d'embrayage**
Kupplungssteuerungsvorrichtung
Clutch control device

(30) Priorité: 29.07.1997 FR 9709658
(43) Date de publication de la demande: 03.02.1999
(73) Titulaire: SKF FRANCE, F-92142 Clamart Cédex (FR)
(72) Inventeur: Arnault, Benoit, 37100 Tours (FR); Baudez, Eric, 92120 Montrouge (FR); Cardon, Fabrice, 78181 Montigny-le-Bretonneux (FR); Weber, Philippe, 37230 Fondettes (FR); Houdayer, Christophe, 37000 Tours (FR); Liverato Yves André, 37370 St. Paterne Racan (FR)
(74) Mandataire: Casalonga, Axel

(56) Documents cités:
- EP-A- 0 086 060
- EP-A- 0 242 657
- WO-A-92/14073
- DE-A- 3 240 076
- DE-A- 19 622 707
- DE-U- 29 700 508

## Description

La présente invention concerne le domaine des unités de commande d'un embrayage, en particulier pour un véhicule automobile.

De telles unités de commande d'embrayage comprennent généralement un tube-guide fixé au carter de la boîte de vitesses, une butée de débrayage montée coulissante sur le tube-guide et capable d'agir sur le dispositif débrayeur de l'embrayage, et une fourchette de débrayage soumise à l'action de moyens de commande et capable d'agir sur la butée de débrayage.

La fourchette de débrayage comporte un logement pour son montage pivotant sur au moins un point d'appui fixe, par exemple solidaire du carter d'embrayage. Le tube-guide présente une extrémité de fixation et une extrémité libre.

On connaît par le document français FR-A-2 662 769 (VALEO) un dispositif de commande d'un embrayage prévu pour former un ensemble unitaire, avant montage. Le tube-guide porte une butée effaçable pour empêcher la butée de débrayage de se désolidariser du tube-guide en coulissant axialement vers son extrémité libre. La fourchette est immobilisée circonférentiellement par rapport au tube-guide.

Un tel dispositif présente l'inconvénient de nécessiter un nombre relativement élevé de pièces et requiert, en particulier, la présence d'une butée effaçable additionnelle de solidarisation de la butée et du tube-guide.

Le document DE 297 00508 décrit un dispositif de débrayage comprenant un élément de montage de débrayage, un tube de guidage susceptible d'être fixé dans une cloche de boîtier coaxiale à l'axe de rotation et traversant axialement l'élément de montage de débrayage, sur lequel l'élément de montage est guidé radialement de façon axialement mobile, et un levier d'embrayage à fixer en basculement par une articulation sur la cloche de boîtier pour transmettre des forces d'actionnement d'embrayage à l'élément de montage. Au moins l'élément de montage, le tube de guidage et le levier d'embrayage forment une unité structurelle avant le montage sur le véhicule automobile dans laquelle au moins le tube de guidage, l'élément de montage et le levier d'embrayage sont reliés de façon imperdable les uns aux autres.

La présente invention a pour objet de remédier aux inconvénients du dispositif précité en proposant un dispositif de commande d'embrayage pourvu d'un faible nombre de pièces et dans lequel la butée, le tube-guide et la fourchette d'embrayage forment, avant montage, un ensemble unitaire.

Le dispositif de commande d'embrayage, selon l'invention, est du type comprenant un tube-guide pourvu d'une partie tubulaire et d'une partie radiale de fixation sur un carter de boîte de vitesses, une butée de débrayage pourvue d'un élément de manoeuvre et d'un roulement et montée coulissante sur la partie tubulaire du tube-guide, et une fourchette de débrayage capable d'agir sur la butée de débrayage et possédant une portion disposée axialement entre la butée de débrayage et la partie de fixation du tube-guide. L'élément de manoeuvre de la butée de débrayage comprend des moyens sécables de liaison axiale temporaire du tube-guide et de la butée de débrayage de façon à maintenir ensemble le tube-guide, la butée de débrayage et la fourchette de débrayage. Ainsi, ces trois pièces forment un ensemble unitaire qui peut être manipulé aisément. Les moyens de liaison axiale temporaire peuvent être intégrés à l'élément de manoeuvre sans nécessiter de pièces supplémentaires.

Dans un mode de réalisation de l'invention, l'élément de manoeuvre comprend une portion radiale disposée entre le roulement de la butée de débrayage et la fourchette, ladite portion radiale comportant une surface d'appui prévue pour entrer en contact avec ladite fourchette, les moyens de liaison étant monobloc avec l'élément de manoeuvre. La surface d'appui peut être une plaque d'appui solidaire de la portion radiale. L'élément de manoeuvre peut être réalisé en matériau synthétique surmoulé sur la plaque d'appui et incluant, dès la fabrication, les moyens de liaison.

Avantageusement, l'élément de manoeuvre comprend au moins un pion axial dirigé vers la partie radiale de fixation du tube-guide et capable de s'encliqueter avec ladite partie radiale. Le pion axial peut être de forme cylindrique avec au moins crochet disposé à proximité de son extrémité libre, la partie radiale de fixation du tube-guide incluant au moins un perçage prévu pour coopérer avec le crochet, chaque pion étant fendu axialement pour conférer au crochet une élasticité radiale de façon que le pion se restreigne lors de son passage dans le perçage et reprenne sa forme initiale ensuite, en empêchant la séparation du tube-guide et de la butée de débrayage.

Dans un mode de réalisation de l'invention, chaque pion est supporté par un portion sécable de l'élément de manoeuvre, d'épaisseur réduite, prévue pour se couper lors d'une manoeuvre de la fourchette de débrayage. Ainsi, après le montage de l'embrayage, le ou les pions se séparent de l'élément de manoeuvre lors de la première manoeuvre de l'embrayage, en restant solidaire de la partie radiale de fixation du tube-guide.

La fourchette peut être du type à lumière centrale par laquelle passe axialement la partie tubulaire du tube-guide ou du type à deux doigts disposés radialement de part et d'autre de la partie tubulaire du tube-guide. Dans ce dernier cas, on prévoit des moyens de retenue radiale de la fourchette, par exemple sous la forme de deux languettes axialement élastiques, l'extrémité de chaque languette coopérant avec une nervure d'un doigt de fourchette. Le perçage prévu pour coopérer avec le pion est réalisé sur un bossage en saillie par rapport à la partie radiale de fixation du tube-guide, le bossage étant dirigé axialement vers la butée.

On dispose ainsi d'un dispositif de commande d'embrayage dont l'assemblage unitaire avant montage ne nécessite pas de pièce supplémentaire.

L'invention sera mieux comprise à l'étude de la description détaillée de quelques modes de réalisation pris à titre d'exemples nullement limitatifs et illustrés par les dessins annexés, sur lesquels :
la figure 1 est une vue en élévation de derrière d'un dispositif de commande d'embrayage selon l'invention ;
la figure 2 est une vue en coupe axiale de la figure 1 ;
la figure 3 est une vue de détail de la figure 1, le tube-guide n'étant pas monté ;
la figure 4 est une vue de face en élévation d'une partie radiale de fixation d'un tube-guide ;
la figure 5 est une vue partielle en coupe axiale d'un dispositif de commande d'embrayage selon un premier mode de réalisation de l'invention ;
les figures 6 et 7 montrent l'assemblage du dispositif de commande de la figure 5 ;
la figure 8 est une vue en coupe selon VIII-VIII de la figure 9 d'un dispositif de commande d'embrayage selon l'invention ; et
la figure 9 est une vue similaire à la figure 1 d'un dispositif de d'un dispositif de commande d'embrayage dont la fourchette est du type à deux doigts, le tube-guide n'étant pas représenté ; et
la figure 10 est une vue de détail de la figure 8.

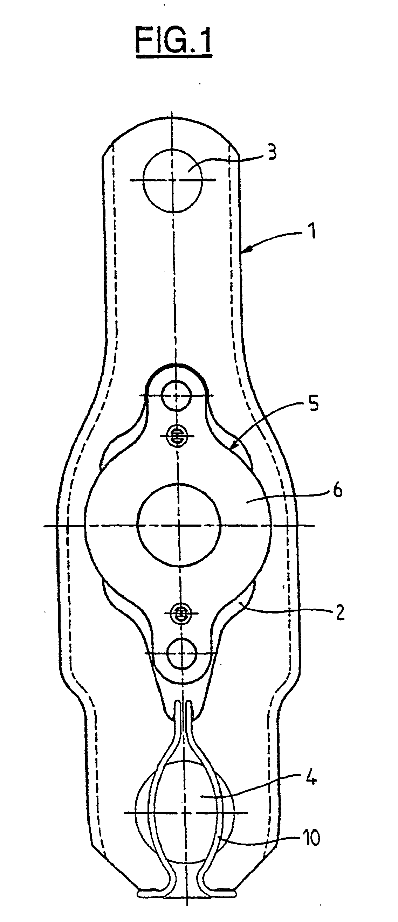

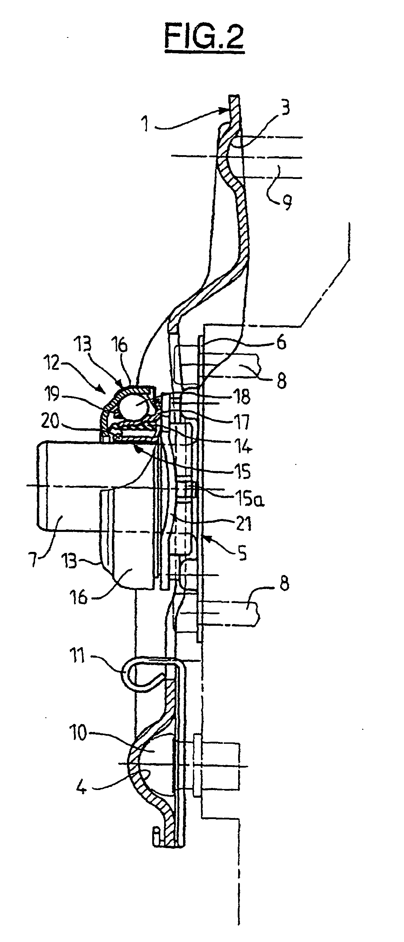

Comme on peut le voir sur les figures 1 et 2, le dispositif de commande d'embrayage comprend une fourchette 1 pourvue d'une lumière centrale 2, d'une empreinte supérieure 3 et d'une empreinte inférieure 4. Un tube-guide 5 comportant une partie radiale de fixation 6 et une partie tubulaire 7 est fixé par des vis 8 au carter de boîte de vitesses, dont une partie est représentée en traits mixtes, de telle sorte que la partie tubulaire 7 passe axialement par la lumière centrale 2 de la fourchette 1. L'empreinte supérieure 3 reçoit un poussoir 9 mobile axialement et capable d'actionner la fourchette 1. L'empreinte inférieure 4 est maintenue en contact avec une rotule fixe 10 par une agrafe 11. Sous l'action du poussoir 9, la fourchette 1 peut pivoter autour de la rotule 10.

La partie tubulaire 7 du tube-guide 5 reçoit une butée de débrayage 12 comprenant un roulement de butée 13, un organe d'autoalignement élastique 14 et un élément de manoeuvre 15. Le roulement 13 comprend une bague extérieure tournante 16, une bague intérieure fixe 17 entre lesquelles est disposée une rangée d'éléments roulants 18 maintenue par une cage 19.

L'organe d'autoalignement élastique 14 est solidaire de l'alésage de la bague intérieure 17 et permet au roulement 13 de se déplacer radialement par rapport à l'élément de manoeuvre 15. L'élément de manoeuvre 15 comprend une portion tubulaire 20 et une plaque d'appui métallique 21. La portion tubulaire 20 peut être surmoulée sur la plaque d'appui 21. La fourchette 1, en contact avec la plaque d'appui 21, peut donc provoquer le déplacement de la butée 12 axialement le long du tube-guide 7. L'élément de manoeuvre 15 comprend deux doigts 15a élastiques s'étendant axialement à l'opposé du roulement 13 pour permettre une solidarisation axiale de la butée 12 et de la fourchette 1 avant le montage sur le tube-guide 5. Les doigts 1 Sa font saillie dans la lumière centrale 2 de la fourchette 1 et s'accrochent sur les bords parallèles 2a de ladite lumière en empêchant une éventuelle séparation axiale de ces éléments.

L'élément de manoeuvre comporte deux surfaces parallèles 15b coopérant avec les bords parallèles 2a de la lumière et assurant la solidarisation et l'orientation angulaire de l'élément de manoeuvre 15 de la butée 12 par rapport à la fourchette 1 dans le sens circonférentiel.

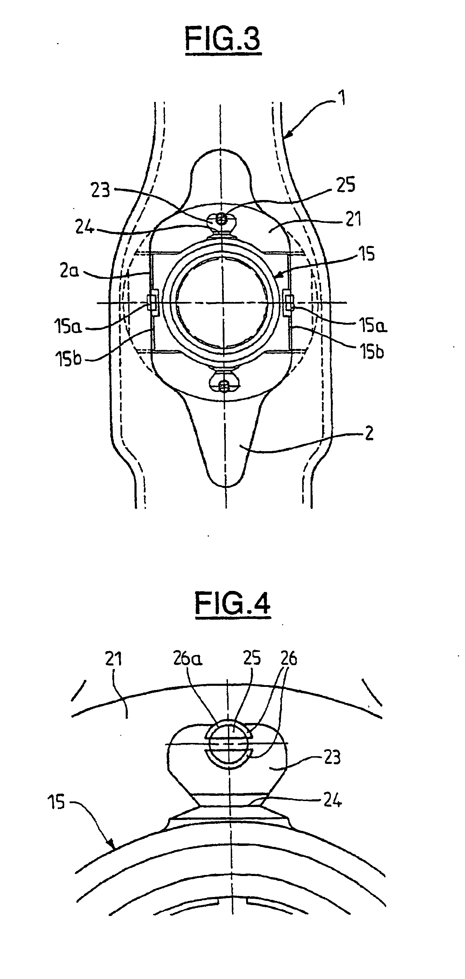

Comme on le voit plus particulièrement sur les figures 4 à 7, l'élément de manoeuvre 15 comprend également une portion radiale 22 disposée du côté de la plaque 21 opposée au roulement 13. La portion radiale 22 se prolonge radialement vers l'extérieur par plusieurs extensions 23 pourvues d'une rainure 24 formant une zone de rupture. A chaque extension 23 est associé un pion 25 s'étendant axialement à l'opposé de la plaque 21. Chaque pion 25 est fendu à son extrémité libre et comprend des portions de crochets 26 pourvues d'une rampe en pente douce 26a du côté opposé à la plaque 21 et d'un épaulement radial 26b du côté de la plaque 21. Les crochets 26 peuvent fléchir radialement l'un vers l'autre, le pion 25 étant fendu.

La portion radiale de fixation 6 du tube-guide 5 est pourvue de bossages 27 répartis circonférentiellement et radialement de façon à correspondre au pion 25. Les bossages 27 sont pourvus d'un perçage 28 axial et de diamètre correspondant à celui du pion 25.

Lors de l'assemblage du dispositif de commande d'embrayage, on vient monter la butée de débrayage 12 sur la fourchette 1 grâce aux doigts élastiques 15a. L'élément de manoeuvre 15 et la fourchette 1 sont ainsi angulairement liés et indexés. On oriente ensuite circonférentiellement les pions 25 en face du perçage 28 des bossages 27 puis on poursuit le mouvement axial relatif de la butée 12 par rapport au tube-guide 5 ce qui provoque la prise de contact des rampes 26a des crochets 26 sur les bords du perçage 28. Les crochets 26 se rapprochent alors l'un de l'autre ce qui permet leur passage dans le perçage 28.

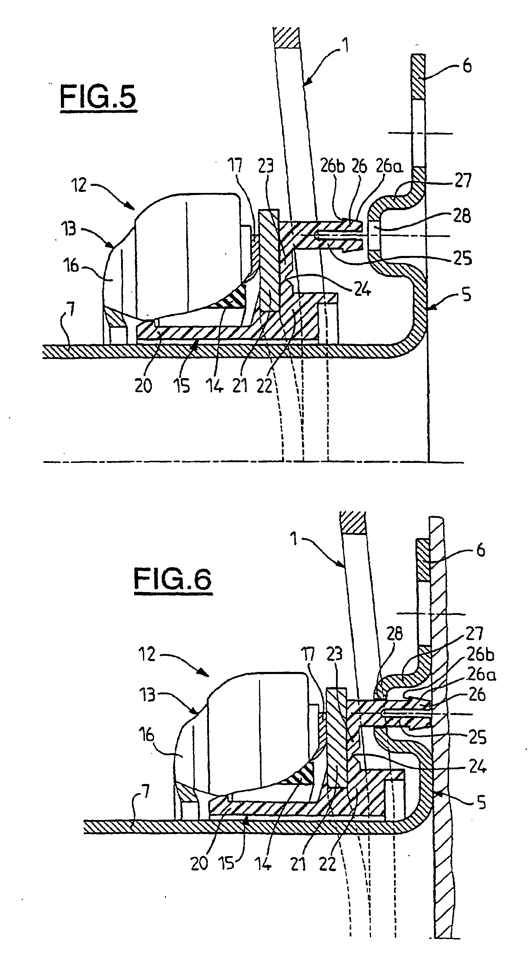

A la fin du montage (figure 6), les crochets 26 reprennent leur forme initiale, l'épaulement 26b empêchant désormais la séparation axiale du tube-guide 5 et de la butée 12. La lumière centrale de la fourchette 1, dans sa partie la plus étroite est de dimension plus faible que la partie radiale de fixation 6 du tube-guide 5 et que la butée 12. Il en résulte que la fourchette 1 est prise axialement entre ces deux éléments et forme un ensemble unitaire avec eux.

L'ensemble ainsi constitué est facilement manipulable et transportable. D'autre part, le montage de cet ensemble sur le carter de boîte de vitesses est grandement facilité puisque les éléments constituant cet ensemble, à savoir butée, fourchette et tube-guide sont déjà correctement indexés angulairement les uns par rapport aux autres dans le sens circonférentiel.

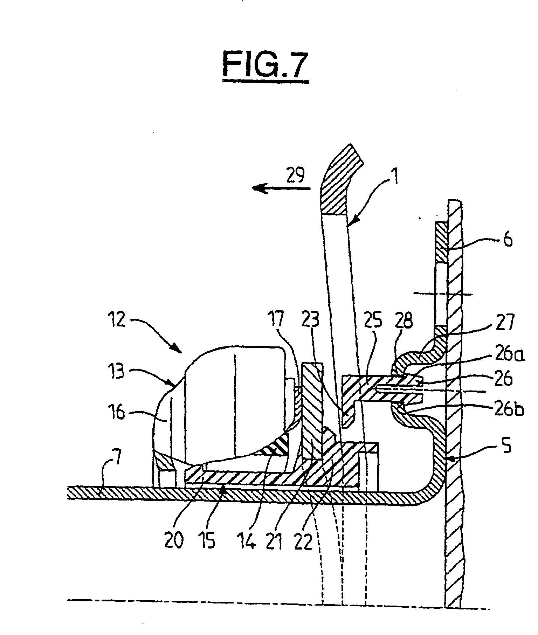

Une fois que l'ensemble est définitivement monté sur le carter de boîte de vitesses, (figure 7), si on actionne axialement la fourchette 1 dans le sens illustré par la flèche 29. la fourchette 1 vient en contact avec la plaque d'appui 21 et exerce un effort qui provoque la rupture de l'extension 23 de la partie radiale 22 de l'élément de manoeuvre 15 au niveau de la rainure 24. La fourchette 1 entraîne dans un mouvement axial la butée 12 supportée par l'élément de manoeuvre 15. Les extensions radiales 23 et les pions 25 restent solidaires du tube-guide 5 grâce aux crochets 26. Les bossages 27 de la partie radiale de fixation 6 du tube-guide 5 sont de dimensions axiales suffisantes pour recevoir les pions 25 sans que ces derniers ne fassent saillie axialement au-delà de ladite partie radiale de fixation 6 (figure 6). On ne risque donc pas de venir polluer les mécanismes environnants avec les pions 25 après leur séparation avec l'organe de manoeuvre.

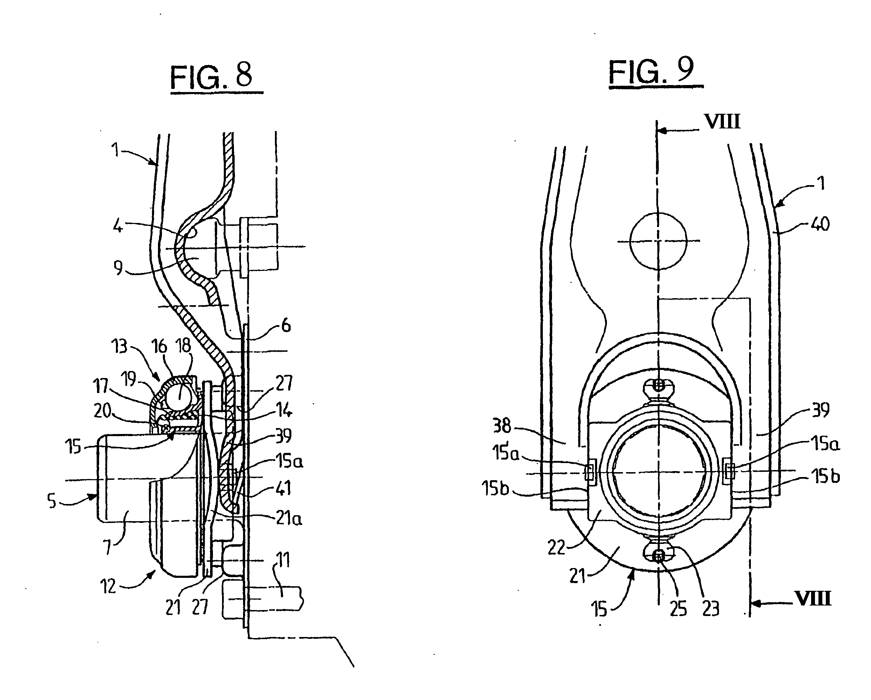

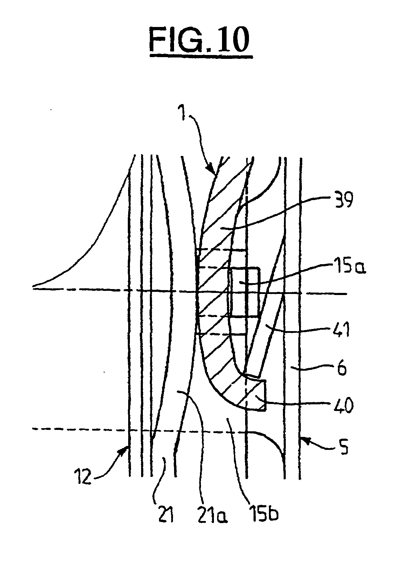

Le mode de réalisation illustré sur les figures 8 et 10 peut s'accomoder des butées et des tubes-guides décrits précédemment. La fourchette 1 est du type à deux doigts latéraux 38 et 39 disposés radialement de part et d'autre de la partie tubulaire 7 du tube-guide 5. La fourchette 1 est pourvue sur son bord d'une nervure 40 lui conférant la rigidité nécessaire. Une portion bombée 2 la de la plaque 21 est en contact avec les doigts 38 et 39.

La fourchette 1 peut être actionnée à son extrémité opposée aux doigts 38 et 39 par un câble, non représenté, et le corps de fourchette pivote sur une rotule fixée sur le carter de boîte de vitesses représenté en traits mixtes. Les doigts 38 et 39 sont parallèles et coopèrent avec des surfaces parallèles 15b de l'élément de manoeuvre 15 ce qui permet d'assurer la liaison angulaire entre la fourchette 1 et l'élément de manoeuvre 15. La partie radiale de fixation 6 est pourvue de deux languettes de verrouillage 41 issues de ladite partie radiale de fixation par découpe partielle. Chaque languette 41 vient s'engager dans un doigt 38, 39 de la fourchette 1 de façon à former une butée radiale pour la nervure 40 de raidissement du doigt 38, 39.

La fourchette 1 peut être introduite radialement après la solidarisation de la butée 12 sur le tube-guide 5, les languettes de verrouillage 41 étant capables de s'effacer au passage des nervures 40 des doigts 38, 39 puis de s'engager derrière lesdites nervures 40 pour assurer le verrouillage radial de la fourchette 1 sur le tube-guide 5.

Grâce à l'invention, on dispose d'un ensemble fourchette - tube-guide - butée facilement manipulable. Le positionnement de cet ensemble sur un carter de boite de vitesses peut être assuré par un robot en une seule opération puisque toute ces pièces sont solidarisées temporairement et indexées angulalrement les unes par rapport aux autres. Le dispositif de commande s'accomode aussi bien d'une fourchette à lumière centrale d'une fourchette à deux doigts.

## Revendications

1. Dispositif de commande d'embrayage du type comprenant un tube-guide (5) pourvu d'une partie tubulaire (7) et d'une partie radiale de fixation (6) sur un carterde boîte de vitesses, une butée de débrayage (12) pourvue d'un élément de manoeuvre (15) et d'un roulement (13) et montée coulissante sur la partie tubulaire du tube-guide, et une fourchette de débrayage (1) capable d'agir sur la butée de débrayage (12) et possédant une portion disposée axialement entre la butée de débrayage (12) et la partie de fixation (6) du tube-guide, **caractérisé par le fait que** l'élément de manoeuvre (15) comprend des moyens sécables de liaison axiale temporaire du tube-guide (5) et de la butée de débrayage (12) de façon à maintenir ensemble le tube-guide (5), la butée de débrayage (12) et la fourchette de débrayage (1).

2. Dispositif selon la revendication 1, **caractérisé par le fait que** l'élément de manoeuvre (15) comprend une portion radiale (22) disposée entre le roulement de la butée de débrayage et la fourchette (1), ladite portion radiale (22) comportant une surface d'appui prévue pour entreren contact avec ladite fourchette (1), les moyens de liaison étant monoblocs avec l'élément de manoeuvre (15).

3. Dispositif selon la revendication 2, **caractérisé par le fait que** la surface d'appui est une plaque d'appui (21) solidaire de la portion radiale (22).

4. Dispositif selon l'une quelconques des revendications précédentes, **caractérisé par le fait que** l'élément de manoeuvre (15) comprend au moins un pion axial (25) dirigé vers la partie radiale de fixation (6) du tube-guide et capable de s'encliqueter avec ladite partie radiale.

5. Dispositif selon la revendication 4, **caractérisé par le fait que** le pion axial (25) est de forme cylindrique avec au moins un crochet (26) disposé à proximité de son extrémité libre, la partie radiale de fixation (6) incluant au moins un perçage (28) prévu pour coopérer avec le crochet (26), chaque pion étant fendu axialement pour conférer au crochet (26) une élasticité radiale de façon que le pion se rétreigne lors de son passage dans le perçage (28) et reprenne sa forme initiale ensuite, en empêchant la séparation du tube-guide (5) et de la butée de débrayage (12).

6. Dispositif selon l'une quelconque des revendications 4 ou 5, **caractérisé par le fait que** chaque pion (25) est supporté par une portion sécable (23) de l'élément de manoeuvre, d'épaisseur réduite (24), prévue pour se rompre lors d'une manoeuvre de la fourchette de débrayage.

7. Dispositif selon l'une quelconques des revendication 1 à 3, **caractérisé par le fait que** la partie radiale de fixation (6) du tube-guide (5) inclut au moins un perçage (28) prévu pour coopérer avec un pion (25).

8. Dispositif selon l'une quelconques des revendications précédentes, **caractérisé par le fait que** la fourchette (1) comprend une lumière centrale (2) par laquelle passe axialement la partie tubulaire (7) du tube-guide (5).

9. Dispositif selon l'une quelconque des revendications 1 à 7, **caractérisé par le fait que** la fourchette (1) comprend deux doigts (38, 39) disposés radialement de part et d'autre de la partie tubulaire (7) du tube-guide (5).

10. Dispositif selon la revendication 8, **caractérisé par le fait qu'il** comprend des moyens de retenue radiale de la fourchette (1).

11. Dispositif selon la revendication 10, **caractérisé en ce que** les moyens de retenue radiale comportent deux languettes (41) axialement élastiques, l'extrémité de chaque languette coopérant avec une nervure (40) d'un doigt de fourchette (1).

12. Dispositif suivant la revendication 5 ou 7, **caractérisé en ce que** le perçage (28) est réalisé sur un bossage (27) en saillie par rapport à la partie radiale de fixation (6) du tube-guide (5), ledit bossage étant dirigé axialement vers la butée (12).

## Patentansprüche

1. Kupplungsbetätigungseinrichtung
mit einem Führungsrohr (5), das mit einem rohrförmigen Abschnitt (7) und einem radialen Befestigungsabschnitt (6) zur Befestigung an einem Getriebegehäuse versehen ist, mit einem Kupplungsausrücker (12), der mit einem Betätigungselement (15) und einem Wälzlager (13) versehen ist und der gleitend auf dem rohrförmigen Abschnitt des Führungsrohres gelagert ist, und mit einer Kupplungsgabel (1), die auf der Kupplungsausrücker (12) wirken kann und
einen Abschnitt aufweist, der sich axial zwischen der Kupplungsausrücker (12) und dem Befestigungsabschnitt (6) des Führungsrohres (5) befindet, **dadurch gekennzeichnet, dass** das Betätigungselement (15) trennbare Mittel zur zeitweiligen axialen Verbindung des Führungsrohres (5) und des Kupplungsausrückers (12) aufweist, um das Führungsrohr (5), die Kupplungsausrücker (12) und die Kupplungsgabel (1) zusammenhalten.

2. Einrichtung nach Anspruch 1, **dadurch gekennzeichnet, dass** das Betätigungselement (15) einen radialen Abschnitt (22) aufweist, der zwischen dem Wälzlager des Kupplungsausrückers und der Kupplungsgabel (1) angeordnet ist, wobei der radiale Abschnitt (22) eine Anlagefläche aufweist, die dafür vorgesehen ist, mit der Kupplungsgabel in Eingriff zu kommen, und die Einrichtungen zur Verbindung mit dem Betätigungselement (15) einstückig sind.

3. Einrichtung nach Anspruch 2, **dadurch gekennzeichnet, dass** die Anlagefläche eine an dem radialen Abschnitt befestigte Anlageplatte (22) ist.

4. Einrichtung nach einem der vorhergehenden Ansprüche, **dadurch gekennzeichnet, dass** das Betätigungselement (15) mindestens einen axialen Rastzapfen (25) aufweist, der auf den radialen Befestigungsabschnitt (6) des Führungsrohres hin gerichtet und in der Lage ist, mit dem radialen Abschnitt (22) zu verrasten.

5. Einrichtung nach Anspruch 4, **dadurch gekennzeichnet, dass** der axiale Rastzapfen (25) zylindrisch ist und mindestens einen Haken (26) aufweist, der in der Nähe seines freien Endes angeordnet ist, wobei der radiale Befestigungsabschnitt (6) mindestens eine Öffnung (28) aufweist, die dafür vorgesehen ist, mit dem Haken (26) zusammenzuwirken, und dass jeder Rastzapfen axial geschlitzt ist, um dem Haken (26) eine radiale Elastizität zu geben, so dass der Rastzapfen sich beim Einstecken in die Öffnung (28) zusammendrücken lässt und anschließend seine ursprüngliche Form wieder annimmt, um die Trennung des Führungsrohres (5) und des Kupplungsausrückers zu verhindern.

6. Einrichtung nach einem der Ansprüche 4 oder 5, **dadurch gekennzeichnet, dass** jeder Rastzapfen (25) auf einem abtrennbaren Abschnitt (23) des Betätigungselementes (15) mit verminderter Dicke, das dazu dient, bei einer Betätigung der Kupplungsgabel aufzureißen.

7. Einrichtung nach einem der Ansprüche 1 bis 3, **dadurch gekennzeichnet, dass** der radiale Befestigungsabschnitt (6) des Führungsrohres (5) mindestens eine Öffnung (28) aufweist, die dafür vorgesehen ist, mit einem Rastzapfen (25) zusammenzuwirken.

8. Einrichtung nach einem der vorhergehenden Ansprüche, **dadurch gekennzeichnet, dass** die Kupplungsgabel (1) eine mittige Öffnung (2) aufweist, durch den der rohrförmige Abschnitt (7) des Führungsrohres (5) axial hindurchführt.

9. Einrichtung nach einem der Ansprüche 1 bis 7, **dadurch gekennzeichnet, dass** die Kupplungsgabel (1) zwei Finger (38,39) aufweist, die radial auf der einen und anderen Seite des rohrförmigen Abschnitts (7) des Führungsrohres (5) angeordnet sind.

10. Einrichtung nach Anspruch 8, **dadurch gekennzeichnet, dass** sie Einrichtungen zur radialen Halterung der Kupplungsgabel (1) aufweist.

11. Einrichtung nach Anspruch 10, **dadurch gekennzeichnet, dass** die Einrichtungen zur radialen Halterung zwei axial elastische Zungen (41) aufweisen, wobei das Ende jeder Zunge mit einer Nut (40) in einem Finger der Kupplungsgabel (1) zusammenwirkt.

12. Einrichtung nach einem der Ansprüche 5 oder 7, **dadurch gekennzeichnet, dass** die Öffnung (28) in einer Sicke (27) enthalten ist, die gegenüber dem radialen Befestigungsabschnitt (6) des Führungsrohres (5) vorspringt, wobei die Sicke axial zu der Kupplungsausrücker (12) hin gerichtet ist.

## Claims

1. Clutch control device, of the type comprising a guide tube (5) provided with a tubular part (7) and with a radial part (6) for fastening on a gearbox case, a declutching stop (12) provided with an operating element (15) and with a rolling bearing (13) fitted so as to slide on the tubular part of the guide tube, and a declutching fork (1) capable of acting on the declutching stop (12) and possessing a portion arranged axially between the declutching stop (12) and the fastening part (6) of the guide tube, **characterized in that** the operating element (15) comprises cleavable means for temporary axial linkage of the guide tube (5) and the declutching stop (12) so as to hold together the guide tube (5), the declutching stop (12) and the declutching fork (1).

2. Device according to Claim 1, **characterized in that** the operating element (15) comprises a radial portion (22) arranged between the rolling bearing of the declutching stop and the fork (1), the said radial portion (22) comprising a support surface intended to enter into contact with the said fork (1), the linkage means being integral with the operating element (15).

3. Device according to Claim 2, **characterized in that** the support surface is a support plate (21) secured to the radial portion (22).

4. Device according to any one of the preceding claims, **characterized in that** the operating element (15) comprises at least one axial pin (25) directed towards the radial fastening part (6) of the guide tube and capable of mating with the said radial part.

5. Device according to Claim 4, **characterized in that** the axial pin (25) is of cylindrical shape with at least one hook (26) arranged in proximity to its free end, the radial fastening part (6) including at least one hole (28) intended to interact with the hook (26), each pin being axially split in order to provide the hook (26) with a radial elasticity so that the pin contracts as it passes through the hole (28) and subsequently resumes its initial shape while preventing separation of the guide tube (5) and the declutching stop (12).

6. Device according to either one of Claims 4 and 5, **characterized in that** each pin (25) is supported by a cleavable portion (23) of the operating element, of reduced thickness (24), intended to break when the declutching fork is operated.

7. Device according to any one of Claims 1 to 3, **characterized in that** the radial fastening part (6) of the guide tube (5) includes at least one hole (28) intended to interact with a pin (25).

8. Device according to any one of the preceding claims, **characterized in that** the fork (1) comprises a central slot (2) through which the tubular part (7) of the guide tube (5) passes axially.

9. Device according to any one of Claims 1 to 7, **characterized in that** the fork (1) comprises two fingers (38, 39) arranged radially on either side of the tubular part (7) of the guide tube (5).

10. Device according to Claim 8, **characterized in that** it comprises means for radial retention of the fork (1).

11. Device according to Claim 10, **characterized in that** the radial retention means include two axially elastic tongues (41), the end of each tongue interacting with a rib (40) of a finger of the fork (1).

12. Device according to Claim 5 or 7, **characterized in that** the hole (28) is formed on a boss (27) which projects with respect to the radial fastening part (6) of the guide tube (5), the said boss being directed axially towards the stop (12).
